(19) Europäisches Patentamt / European Patent Office / Office européen des brevets

(11) **EP 3 941 157 B1**

(12) **EUROPÄISCHE PATENTSCHRIFT**

(45) Veröffentlichungstag und Bekanntmachung des Hinweises auf die Patenterteilung:
**10.09.2025   Patentblatt 2025/37**

(21) Anmeldenummer: **20000253.3**

(22) Anmeldetag: **15.07.2020**

(51) Internationale Patentklassifikation (IPC):
**H05B 6/10** *(2006.01)*       **C21D 1/42** *(2006.01)*
**C21D 9/46** *(2006.01)*

(52) Gemeinsame Patentklassifikation (CPC):
**H05B 6/104; C21D 1/42; C21D 9/46;** Y02P 10/25

(54) **VERFAHREN UND ANLAGE ZUM INDUKTIVEN ERWÄRMEN VON FLACHGUT**

METHOD AND SYSTEM FOR INDUCTIVELY HEATING FLAT ARTICLES

PROCÉDÉ ET INSTALLATION DE CHAUFFAGE INDUCTIF DES MATIÈRES PLATES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.01.2022   Patentblatt 2022/03**

(73) Patentinhaber:
• **ABP Induction Systems GmbH**
  **44147 Dortmund (DE)**
• **Primetals Technologies Austria GmbH**
  **4031 Linz (AT)**

(72) Erfinder:
• **GROSSEIBER, Simon**
  **4060 Leonding (AT)**
• **LENGAUER, Thomas**
  **Weißkirchen a.d. Traun (AT)**

• **FÜRST, Heinz**
  **4210 Gallneukirchen (AT)**
• **ZAHEDI, Michael**
  **4502 St. Marien (AT)**
• **THUS, Achim**
  **47495 Rheinberg (DE)**
• **UMBRASKO, Andrejs**
  **59439 Holzwickede (DE)**

(74) Vertreter: **Hauck Patent- und Rechtsanwälte PartmbB**
**Postfach 11 31 53**
**20431 Hamburg (DE)**

(56) Entgegenhaltungen:
DE-A1- 10 013 061       DE-A1- 4 234 406
US-A1- 2018 092 163

**Beschreibung**

Die vorliegende Erfindung betrifft ein Verfahren zum induktiven Erwärmen von in eine Vorschubrichtung transportierbarem Flachgut mit mindestens einer sich quer zur Vorschubrichtung über die Breite des Flachgutes erstreckenden Querfeld-Induktoreinrichtung mit einer parallel zur Flachgutquerachse verlaufenden Achse. Ferner bezieht sich die vorliegende Erfindung auf eine Anlage, mit der ein derartiges Verfahren durchgeführt werden kann.

Anstelle von konventionellen gasbeheizten Öfen wird Flachgut, wie beispielsweise Bänder, Bleche, Brammen, auch induktiv erwärmt. Hierbei wird in dem Flachgut ein Strom induziert, wodurch das Material erwärmt wird.

Induktive Erwärmungsanlagen für Flachgut werden der Längsfeld- oder der Querfelderwärmung zugeordnet. Bei der Längsfelderwärmung wird das zu erwärmende Flachgut von der Induktorspule vollständig umschlossen, so dass der magnetische Hauptfluss in Vorschubrichtung des Flachgutes gerichtet ist. Die induzierten Ströme schließen sich über dem Werkstückquerschnitt, wobei die sich einstellende Temperaturverteilung bei einer geeigneten Frequenz des Induktorstromes über der gesamten Bandbreite des Flachgutes nahezu homogen ist.

Bei Querfeld-Erwärmungsanlagen umschließen die Induktorspulen das Flachgut nicht, sondern sind an den Oberflächen des zu erwärmenden Flachgutes angeordnet. Auf diese Weise ist der magnetische Hauptfluss der Induktorspulen senkrecht zur Oberfläche des Flachgutes gerichtet. Nachteilig ist bei Querfeld-Erwärmungsanlagen jedoch, dass die Temperaturverteilung im Flachgut normalerweise inhomogen ist. Dies erfordert für jeden Einsatzfall eine angepasste Konstruktion der geometrischen Abmessungen und eine Optimierung der Betriebsparameter einer Querfeld-Erwärmungsanlage.

Es ist bereits bekannt, die nachteilige inhomogene Temperaturverteilung durch eine gezielte Gestaltung der Induktorspulen zu beeinflussen. Ferner sind weitere Lösungen zur flexiblen Einstellung der Temperaturverteilung in Flachgut bekannt, beispielsweise die Anordnung von zwei Induktorspulen quer zum Flachgut und zwei Induktorspulen längs zum Flachgut. Die beiden sich in Längsrichtung des Flachgutes erstreckenden Spulen können in Querrichtung des Flachgutes verschoben werden, so dass die Temperaturverteilung an den Seitenkanten des Flachgutes einstellbar ist (JP 63195397).

Andere Lösungen sind in der DE 39 28 629 A1, der EP 0 667 731 B1, der DE 42 34 406 A1 und der DE 100 13 061 A1 beschrieben.

Aus US 2018/0092163 A1 ist ein magnetisches Heizverfahren bekannt, bei dem magnetische Rollen mit untereinander verschiedenen magnetischen Polen drehend relativ zu einem metallischen Flachgut positioniert sind. Für die Positionierung der drehenden Rollen werden vier verschiedene Typen der Anordnung vorgeschlagen.

Die DE 103 12 623 A1 befasst sich mit einer Querfeld-Erwärmungsanlage mit den Merkmalen des Oberbegriffes von Patentanspruch 1. Hier besitzt die Induktoreinrichtung mindestens zwei parallel zur Ebene des Flachgutes übereinander angeordnete Induktorlagen, die unabhängig voneinander quer zur Vorschubrichtung verschiebbar sind, um auf diese Weise eine flexible Einstellung der Temperaturverteilung im Flachgut in Querrichtung des Flachgutes zu erreichen.

Noch weitere Lösungen sind in der EP 0 274 673 B, der EP 1 648 628 A1 und der EP 1 148 762 B1 beschrieben. In der erstgenannten Veröffentlichung wird beschrieben, wie durch Anpassung der Spulenform eine unterschiedliche Energiebeaufschlagung und somit ein unterschiedlicher Temperaturanstieg über die Breite des Flachgutes erreicht werden kann. Die an zweiter Stelle genannte Veröffentlichung offenbart die Möglichkeit der Beeinflussung des Temperaturquerprofiles durch eine seitliche Einstellung von Querfeld-Induktionsspulen, zumeist im Randbereich. Die an dritter Stelle genannte Veröffentlichung beschreibt die Möglichkeit einer Einstellung des Temperaturquerprofiles durch bewegliche Kerne.

Der vorliegenden Erfindung liegt die Aufgabe zugrunde, ein Verfahren und eine Anlage vorzusehen, mit denen bei der induktiven Erwärmung von Flachgut eine besonders genaue Temperaturverteilung über dessen Querprofil erzielt werden kann.

Diese Aufgabe wird erfindungsgemäß bei einem Verfahren der angegebenen Art dadurch gelöst, dass die Querfeld-Induktoreinrichtung derart variabel positioniert wird, dass sich ihre Achse in einer Vertikalebene schräg zur Flachgutquerachse erstreckt.

Die erfindungsgemäße Lösung basiert somit auf dem Gedanken, je nach Anforderung den Abstand zwischen der Querfeld-Induktoreinrichtung und der Oberseite bzw. der Unterseite des Flachgutes durch eine Schrägstellung der Querfeld-Induktoreinrichtung über das Querprofil des Flachgutes zu variieren, so dass das Flachgut über sein Querprofil unterschiedlich stark erwärmt wird. Es ist dabei davon auszugehen, dass die Erwärmung um so geringer ist, je größer der Abstand zwischen Flachgut und Querfeld-Induktoreinrichtung ist. Das macht sich insbesondere in den Querendbereichen des Flachgutes bemerkbar, wodurch durch die Schrägstellung der Induktoreinrichtung in einem Endbereich ein großer Abstand und im anderen Endbereich ein geringer Abstand vorgesehen wird, so dass die Endbereiche hier unterschiedlich stark erwärmt werden. Falls der andere Endbereich stärker erwärmt werden soll, wird in diesem Bereich durch Schrägstellung ein geringerer Abstand erzeugt als beim anderen Endbereich. Durch Änderung der Neigung können somit beide Querendbereiche variabel erwärmt werden.

Durch die erfindungsgemäß durchgeführte Schrägstellung der Querfeld-Induktoreinrichtung wird somit der Abstand zum Flachgut variiert, so dass durch unterschiedliche Abstände der Induktoreinrichtung zum Flachgut dessen Temperaturverteilung beim Erwärmen optimiert werden kann.

Der in das Material induzierte elektrische Strom hängt nämlich von der Distanz zur Spule ab. Im Fall der hier beschriebenen Querfeld-Induktionsmethode kann diese Abhängigkeit durch die folgende Formel wiedergegeben werden

$$P = P0 * e-kx$$

worin P0 der induzierte Strom bei einer minimalen Distanz zum Material ist, x die Distanz ist und k ein charakteristischer Koeffizient für die Systemgeometrie ist.

In Weiterbildung der Erfindung wird dabei vorzugsweise so vorgegangen, dass eine Temperatur des Flachgutes vor der Querfeld-Induktoreinrichtung gemessen und in Abhängigkeit davon eine Schrägstellung der Querfeld-Induktoreinrichtung durchgeführt wird. Hierbei wird insbesondere ein Temperaturprofil des Flachgutes über die Breite desselben gemessen. Insbesondere in dem Fall, in dem hierbei Temperaturunregelmäßigkeiten infolge von Inhomogenitäten und anderen Ursachen im Flachgut gemessen werden, kann dann durch die Schrägstellung ein entsprechender Ausgleich bzw. eine Kompensation beim Erwärmungsvorgang durchgeführt werden. Hierbei gibt beispielsweise die Temperaturmesseinrichtung ein entsprechendes Signal an eine Steuereinrichtung, die eine entsprechende Bewegung der Induktoreinrichtung (Schrägstellung derselben) bewirkt.

So wird beispielsweise von der Steuereinrichtung ein entsprechendes Temperatur- und Positionsmodell errechnet, das die erforderliche Wärmeenergiebeaufschlagung über die Breite des Flachgutes wiedergibt, und die Induktoreinrichtung wird auf die berechnete und erforderliche Neigung eingestellt, um die Temperaturabweichung zu kompensieren.

Speziell kann dabei so vorgegangen werden, dass in Abhängigkeit von der gemessenen Temperatur des Flachgutes bzw. des Temperaturprofiles die erforderliche Energiebeaufschlagung der Querfeld-Induktoreinrichtung ermittelt wird, die dann zur Berechnung der Schrägstellung der Querfeld-Induktoreinrichtung in Querrichtung des Flachgutes benutzt wird. Auf diese Weise kann dann eine genaue Temperatureinstellung über das Querprofil des Flachgutes erfolgen. Zusätzlich zur Einstellung der Energiebeaufschlagung wird daher der Schrägstellungswinkel der Induktoreinrichtung eingestellt.

Erfindungsgemäß können eine obere und/oder eine untere Querfeld-Induktoreinrichtung schräggestellt werden. Dabei kann die Schrägstellung der Querfeld-Induktoreinrichtung oder Querfeld-Induktoreinrichtungen auf hydraulische, pneumatische oder elektromechanische Weise erfolgen.

In Weiterbildung der Erfindung wird die Querfeld-Induktoreinrichtung quer zur Flachgutlängsachse verschoben. Dies kann vorzugsweise in beiden Richtungen erfolgen. Hierdurch können zusätzlich zur Schrägstellung Temperaturunregelmäßigkeiten ausgeglichen bzw. Temperaturabweichungen kompensiert werden, so dass sich letztendlich am Ende des Erwärmungsprozesses ein homogenes Temperaturprofil des Flachgutes ergibt. Hierbei wird die Querfeld-Induktoreinrichtung in Abhängigkeit von der Temperaturmessung des Flachgutes vor der Querfeld-Induktoreinrichtung quer zur Flachgutlängsachse verschoben.

Erfindungsgemäß wird dabei insbesondere in Abhängigkeit von der Temperaturmessung des Flachgutes von der Steuereinrichtung eine Schrägstellung und Querpositionierung der Querfeld-Induktoreinrichtung durchgeführt. Mit anderen Worten, die Querfeld-Induktoreinrichtung wird hierbei in Querrichtung relativ zum Flachgut verschoben und relativ zur Flachgutquerachse schräggestellt, um die gewünschte Temperatureinstellung zu erreichen.

Speziell kann eine Vielzahl von Temperaturmessungen, insbesondere in Zwischenpositionen, am Flachgut durchgeführt werden, um auf Temperaturabweichungen flexibel reagieren zu können. Dabei können erfindungsgemäß Anpassungen an die jeweiligen Gegebenheiten vorgenommen werden, um in Bezug auf die Temperatureinstellung eine besonders hohe Genauigkeit zu erreichen.

Die vorliegende Erfindung betrifft ferner eine Anlage zum induktiven Erwärmen von in eine Vorschubrichtung transportierbarem Flachgut mit mindestens einer sich quer zur Vorschubrichtung über die Breite des Flachgutes erstreckenden Querfeld-Induktoreinrichtung mit einer parallel zur Flachgutquerachse verlaufenden Achse.

Die erfindungsgemäß ausgebildete Anlage ist dadurch gekennzeichnet, dass sie eine Positioniereinrichtung für die Querfeld-Induktoreinrichtung aufweist, mit der diese so positionierbar ist, dass sich ihre Achse in einer Vertikalebene schräg zur Flachgutquerachse erstreckt.

Dabei ist die Querfeld-Induktoreinrichtung vorzugsweise in einem Rahmen oder Gestell der Anlage so gelagert, dass sie an dem einen oder anderen Querende angehoben oder abgesenkt werden kann, um die gewünschte Schrägstellung zu erreichen. Speziell weist dabei die Positioniereinrichtung vorzugsweise in jedem Querendbereich der Querfeld-Induktoreinrichtung eine Positioniervorrichtung zum Anheben oder Absenken des jeweiligen Querendes der Querfeld-Induktoreinrichtung auf.

Ferner umfasst die Anlage in Weiterbildung eine Temperaturmesseinrichtung für das Flachgut vor der Querfeld-Induktoreinrichtung. Des Weiteren ist dabei eine Steuereinrichtung vorgesehen, die der Ansteuerung der Positioniereinrichtung zum Anheben oder Absenken der Induktoreinrichtung in Abhängigkeit von der Temperaturmesseinrichtung dient. Die Temperaturmesseinrichtung misst dabei insbesondere ein Temperaturprofil in Querrichtung des Flachgutes.

Dabei funktioniert die erfindungsgemäß ausgebildete Anlage vorzugsweise so, dass die vorgesehene Steuereinrichtung die Energiebeaufschlagung der Querfeld-Induktoreinrichtung in Abhängigkeit von der gemessenen Temperatur ermittelt und eine Wechselstromquelle zur Energiezufuhr entsprechend ansteuert. Ferner wird in Abhängigkeit davon die Positioniereinrichtung zur Schrägstellung der Induktoreinrichtung angesteuert, so dass durch Variation der Energiezufuhr und des Abstandes über das Querprofil des Flachgutes eine optimale Temperaturverteilung erreicht werden kann.

Vorzugsweise weist die Anlage eine obere und untere Querfeld-Induktoreinrichtung auf, von denen eine oder beide angesteuert werden können.

Wie erwähnt, sind zum Schrägstellen der Induktoreinrichtung Positioniervorrichtungen vorgesehen, die jeweils als hydraulisches, pneumatisches und/oder elektromechanisches Stellorgan ausgebildet sind.

In Weiterbildung weist die erfindungsgemäße Anlage eine Einrichtung zur Querverschiebung der Induktoreinrichtung auf. Hierbei wird die Induktoreinrichtung in Querrichtung relativ zum Flachgut bewegt, so dass hiermit zusätzlich zur Schrägstellung der Induktoreinrichtung eine weitere Variationsmöglichkeit zum Erhitzen des Querprofiles des Flachgutes gegeben ist. Hierbei wird beispielsweise das die Induktoreinrichtung tragende Gestell der Anlage insgesamt relativ zum Flachgut quer verschoben. Hierdurch werden die Effekte aus der Schrägstellung und der Querposition überlagert, um die gewünschte Temperaturverteilung zu erreichen.

Die erfindungsgemäß vorgesehene Temperaturmesseinrichtung kann eine Vielzahl von Sensoren aufweisen, um auf diese Weise eine besonders genaue Temperaturmessung durchführen zu können, so dass hierdurch die Genauigkeit der Erwärmung des Flachgutes über dessen Querprofil gesteigert werden kann.

Erfindungsgemäß wird somit eine Verbesserung der Genauigkeit und Homogenität des Temperaturquerprofiles des Flachgutes erreicht. Ferner werden homogene Oberflächen des Flachgutes sowie homogene Materialeigenschaften über die Breite desselben erzielt. Das Endprodukt besitzt eine hohe Flachgutprofilgenauigkeit. Ferner wird eine Verbesserung der Homogenität des Verschleißes der Arbeitswalzen und somit eine verlängerte Lebensdauer der Anlage erreicht.

Die Erfindung wird nachfolgend anhand von Ausführungsbeispielen in Verbindung mit der Zeichnung im Einzelnen erläutert. Es zeigen:

Figur 1 ein Diagramm, das die induzierte Stromdichte in Abhängigkeit von der Distanz zwischen der Spule und dem Material wiedergibt;

Figur 2 einen schematischen Querschnitt durch eine erste Ausführungsform einer Anlage zum induktiven Erwärmen von Flachgut; und

Figur 3 einen schematischen Querschnitt durch eine zweite Ausführungsform einer Anlage zum induktiven Erwärmen von Flachgut.

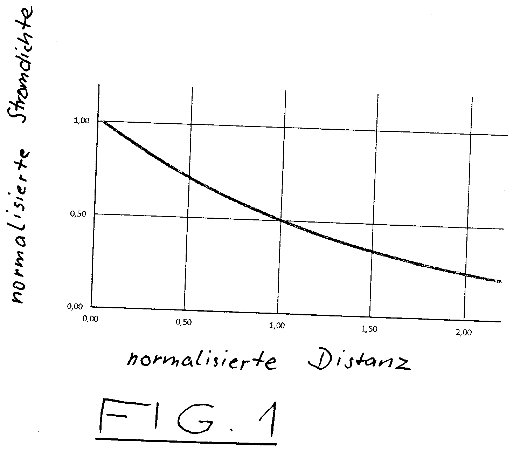

Figur 1 zeigt ein Diagramm, das die induzierte Stromdichte in Abhängigkeit von der Distanz zwischen der Spule und dem Material wiedergibt. Auf der Ordinate ist hierbei die normalisierte Stromdichte angegeben, während auf der Abszisse die normalisierte Distanz dargestellt ist. Man erkennt deutlich, dass die Stromdichte mit zunehmender Distanz abnimmt.

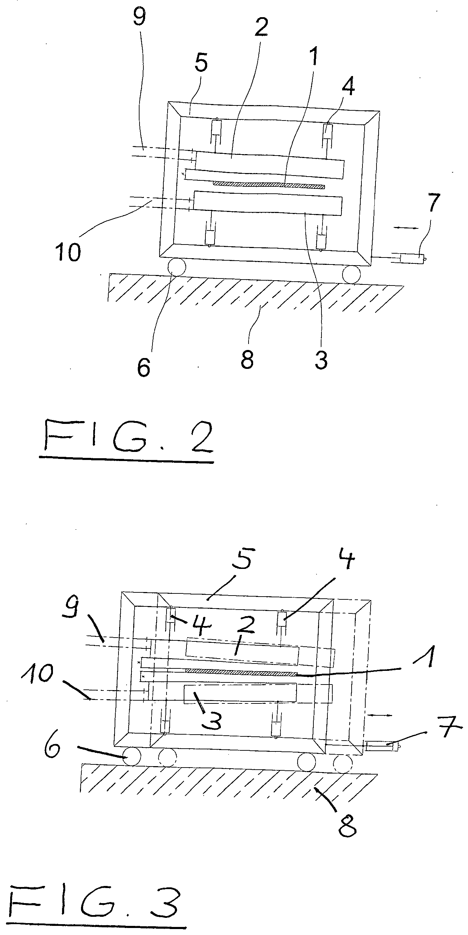

Die in Figur 2 schematisch dargestellte Anlage zum induktiven Erwärmen von in eine Vorschubrichtung transportierbarem Flachgut besitzt eine obere Querfeld-Induktoreinrichtung 2 und eine untere Querfeld-Induktoreinrichtung 3, die in bekannter Weise ausgebildet sein können und hier nur schematisch jeweils als Balken dargestellt sind. Die beiden Einrichtungen 2, 3 weisen geeignete Induktionsspulen auf, die über elektrische Leiter 9, 10 mit Wechselstrom gespeist werden, um entsprechende Wirbelströme zu erzeugen, die eine Erwärmung des zwischen den beiden Querfeld-Induktoreinrichtungen 2, 3 angeordneten Flachgutes bewirken. Bei dem Flachgut 1 handelt es sich hierbei um ein zu erwärmendes Stahlband, das in einer Richtung senkrecht zur Zeichnungsebene die Anlage durchläuft.

Die beiden Querfeld-Induktoreinrichtungen 2, 3 sind hierbei breiter als das Flachgut 1 ausgebildet und jeweils über zwei als Hydraulikzylinder ausgebildete Positioniervorrichtungen 4 an einem Rahmen 5 der Anlage höhenverstellbar gelagert. Die Anlage ist mithilfe von Rollen 6 auf einer mit Schienen versehenen Basis 8 in Querrichtung, d.h. senkrecht zur Längsachse des Flachgutes 1, verfahrbar. Eine entsprechende Antriebseinrichtung ist bei 7 dargestellt.

Die Anlage ist mit einer Positioniereinrichtung für die beiden Querfeld-Induktoreinrichtungen 2, 3 versehen, welche die dargestellten Positioniervorrichtungen 4 umfasst. Jede Induktoreinrichtung 2, 3 ist daher mit zwei Positioniervorrichtungen 4 versehen, die ein Anheben oder Absenken der Induktoeinrichtungen 2, 3 in deren Querendbereichen bewirken. Bei der in Figur 1 dargestellten Ausführungsform erstreckt sich die untere Induktoreinrichtung 3 parallel zum Flachgut 1 und im Abstand hiervon, während die obere Induktoreinrichtung 2 hierzu schräg angeordnet ist. Die Schrägstellung der Induktoreinrichtung 2 wird durch Betätigung der in Figur 1 links dargestellten Positioniervorrichtung 4 erreicht, die die Induktoreinrichtung 2 in diesem Bereich etwas angehoben hat, so dass sich deren Abstand zum Flachgut 1 vergrößert.

Diese Schrägstellung bzw. Anhebung der Induktoreinrichtung 2 hat den Zweck, den Abstand der Induktoreinrichtung 2 zum Flachgut 1 zu vergrößern und dadurch die Erwärmung desselben in diesem Bereich gegenüber der Erwärmung im anderen Querendbereich zu variieren. Durch den größeren Abstand wird daher das Flachgut in diesem Endbereich geringer erwärmt als im gegenüberliegenden Endbereich, so dass hierdurch beispielsweise eine Vergleichmäßigung des Temperaturprofiles in Querrichtung des Flachgutes 1 erzielt werden kann.

Speziell funktioniert die Anlage dabei so, dass vor dem Passieren der Anlage eine Messeinrichtung (hier nicht gezeigt) angeordnet ist, die ein Temperaturprofil in Querrichtung des Flachgutes 1 misst. Das entsprechende Signal der Messeinrichtung wird einer Steuereinrichtung (nicht gezeigt) zugeführt, die hieraus ein Temperatur- und Positionsmodell ermittelt und einerseits die Wechselstromquelle für die beiden Induktoreinrichtungen 2, 3 sowie andererseits die beiden Positioniervorrichtungen 4 der oberen Induktoreinrichtung 2 ansteuert. Die beiden Induktoreinrichtungen 2, 3 sowie die Positioniervorrichtungen 4 werden daher so angesteuert, dass sich über das Querprofil des Flachgutes 1 eine homogene Temperaturverteilung ergibt.

Figur 3 zeigt eine Ausführungsform einer Anlage, bei der zusätzlich zur Schrägstellung der Indutktoreinrichtungen 2, 3 eine Verschiebung der Anlage in Querrichtung relativ zum Flachgut 1 möglich ist. In der Figur sind punktiert die beiden nach rechts verschobenen Stellungen der Induktoreinrichtungen 2, 3 dargestellt. Hierzu wird das Gehäuse der Anlage über an der Unterseite des zugehörigen Rahmens 5 angeordnete Rollen 6 in der Figur nach rechts verschoben, wobei die verschobene Stellung strichpunktiert dargestellt ist. Nach dem Verschieben befindet sich daher das Flachgut 1 nicht mehr mittig in Bezug auf die beiden Induktoreinrichtungen 2, 3 sondern ist relativ zu diesen nach links verschoben.

Darüber hinaus ist die Anlage mit einer Einrichtung zum Schrägstellen der beiden Induktoreinrichtungen 2, 3 versehen. In diesem Fall sind sowohl die obere als auch die untere Induktoreinrichtung 2, 3 über die in der Figur links dargestellten Positioniervorrichtungen 4 etwas nach oben und nach unten bewegt worden, so dass sich eine entsprechende Schrägstellung ergibt. Im linken Querendbereich des Flachgutes 1 ist daher der Abstand zur jeweiligen Induktoreinrichtung 2, 3 größer als im rechten Querendbereich desselben.

Auch bei dieser Ausführungsform ist eine Messeinrichtung (nicht gezeigt) vor dem Passieren der Anlage vorgesehen, die ein Temperaturquerprofil des Flachgutes 1 misst und ein entsprechendes Signal an eine zugehörige Steuereinrichtung (ebenfalls nicht gezeigt) gibt. Diese Steuereinrichtung steuert dann sowohl die Wechselstromquelle für die Energiebeaufschlagung der beiden Induktoreinrichtungen 2, 3 als auch die Positioniereinrichtung für die Schrägstellung der Induktoreinrichtungen 2, 3 und die Einrichtung zum Querverschieben derselben an. Das von der Steuereinrichtung erzeugte Positions- und Temperaturmodell wird daher durch Betätigung der drei vorstehend genannten Einrichtungen verwirklicht, so dass sich am Austritt der Anlage für das Flachgut 1 ein im Wesentlichen homogenes Temperaturquerprofil ergibt.

## Patentansprüche

1. Verfahren zum induktiven Erwärmen von in eine Vorschubrichtung transportierbarem Flachgut (1) mit mindestens einer sich quer zur Vorschubrichtung über die Breite des Flachgutes (1) erstreckenden Querfeld-Induktoreinrichtung (2, 3) mit einer parallel zur Flachgutquerachse verlaufenden Achse, **dadurch gekennzeichnet, dass** eine obere und/oder eine untere Querfeld-Induktoreinrichtung (2, 3) schräggestellt wird, wobei ihr Abstand zum Flachgut variiert.

2. Verfahren nach Anspruch 1, **dadurch gekennzeichnet, dass** eine Temperatur des Flachgutes (1) vor der Querfeld-Induktoreinrichtung (2, 3) gemessen und in Abhängigkeit davon eine Schrägstellung der Querfeld-Induktoreinrichtung (2, 3) durchgeführt wird.

3. Verfahren nach Anspruch 2, **dadurch gekennzeichnet, dass** ein Temperaturprofil über die Breite des Flachgutes (1) gemessen wird.

4. Verfahren nach Anspruch 2 oder 3, **dadurch gekennzeichnet, dass** in Abhängigkeit von der gemessenen Temperatur oder dem gemessenen Temperaturprofil die Energiebeaufschlagung der Querfeld-Induktoreinrichtung (2, 3) ermittelt wird.

5. Verfahren nach einem der vorangehenden Ansprüche, **dadurch gekennzeichnet, dass** die Schrägstellung der Querfeld-Induktoreinrichtung (2, 3) auf hydraulische, pneumatische oder elektromechanische Weise erfolgt.

6. Verfahren nach einem der vorangehenden Ansprüche, **dadurch gekennzeichnet, dass** die Querfeld-Induktoreinrichtung (2, 3) quer zur Flachgutlängsachse verschoben wird.

7. Verfahren nach Anspruch 6, **dadurch gekennzeichnet, dass** die Querfeld-Induktoreinrichtung (2, 3) in Abhängigkeit von der Temperaturmessung des Flachgutes (1) vor der Querfeld-Induktoreinrichtung (2, 3) quer zur Flachgutlängsachse verschoben wird.

8. Verfahren nach den Ansprüchen 2, 4 und 7, **dadurch gekennzeichnet, dass** in Abhängigkeit von der Temperaturmessung das Flachgut (1) vor der Querfeld-Induktoreinrichtung (2, 3) eine Schrägstellung und eine Querpositionierung der Querfeld-Induktoreinrichtung (2, 3) durchgeführt werden.

9. Verfahren nach einem der vorangehenden Ansprüche, **dadurch gekennzeichnet, dass** eine Vielzahl von Temperaturmessungen, insbesondere in Zwischenpositionen, am Flachgut (1) durchgeführt wird.

10. Anlage zum induktiven Erwärmen von in eine Vorschubrichtung transportierbarem Flachgut (1) mit mindestens einer sich quer zur Vorschubrichtung über die Breite des Flachgutes (1) erstreckenden Querfeld-Induktoreinrichtung (2, 3) mit einer parallel zur Flachgutquerachse verlaufenden Achse, **dadurch gekennzeichnet, dass** die Anlage eine Positioniereinrichtung für die Querfeld-Induktoreinrichtung (2, 3) aufweist, mit der eine obere und/oder eine untere Querfeld-Induktoreinrichtung (2, 3) schräggestellt wird, wobei ihr Abstand zum Flachgut variiert.

11. Anlage nach Anspruch 10, **dadurch gekennzeichnet, dass** die Positioniereinrichtung in jedem Querendbereich der Querfeld-Induktoreinrichtung (2, 3) eine Positioniervorrichtung (4) zum Anheben oder Absenken des jeweiligen Querendes der Querfeld-Induktoreinrichtung (2, 3) umfasst.

12. Anlage nach Anspruch 10 oder 11, **dadurch gekennzeichnet, dass** sie eine Temperaturmesseinrichtung für das Flachgut (1) vor der Querfeld-Induktoreinrichtung (2, 3) umfasst.

13. Anlage nach Anspruch 12, **dadurch gekennzeichnet, dass** sie eine Steuereinrichtung umfasst, die zur Ansteuerung der Positioniereinrichtung zum Anheben oder Absenken der Induktoreinrichtung 2, 3) in Abhängigkeit von der Temperaturmesseinrichtung ausgebildet ist.

14. Anlage nach Anspruch 12 oder 13, **dadurch gekennzeichnet, dass** die Temperaturmesseinrichtung ein Temperaturprofil in Querrichtung des Flachgutes (1) misst.

15. Anlage nach einem der Ansprüche 13 oder 14, **dadurch gekennzeichnet, dass** die Steuereinrichtung die Energiebeaufschlagung der Querfeld-Induktoreinrichtung (2, 3) in Abhängigkeit von der gemessenen Temperatur ermittelt und eine Wechselstromquelle zur Energiezufuhr entsprechend ansteuert.

16. Anlage nach einem der Ansprüche 10 bis 15, **dadurch gekennzeichnet, dass** sie eine obere und eine untere Querfeld-Induktoreinrichtung (2, 3) aufweist.

17. Anlage nach einem der Ansprüche 10 bis 16, **dadurch gekennzeichnet, dass** die Positioniervorrichtung (4) als hydraulisches, pneumatisches und/oder elektromechanisches Stellorgan ausgebildet ist.

18. Anlage nach einem der Ansprüche 10 bis 17, **dadurch gekennzeichnet, dass** sie eine Einrichtung zur Querverschiebung der Induktoreinrichtung (2, 3) aufweist.

19. Anlage nach Anspruch 13 und 18, **dadurch gekennzeichnet, dass** die Steuereinrichtung sowohl die Positioniereinrichtung zur Schrägstellung als auch die Einrichtung zur Querverschiebung ansteuert.

20. Anlage nach einem der Ansprüche 12 bis 19, **dadurch gekennzeichnet, dass** die Temperaturmesseinrichtung eine Vielzahl von Sensoren besitzt.

**Claims**

1. Method for inductive heating of flat material (1), which can be transported in a feed direction, with at least one cross-field inductor device (2, 3) which extends transversely to the feed direction over the width of the flat material (1) and has an axis running parallel to the flat material transverse axis, **characterized in that** an upper and/or a lower cross-field inductor device (2, 3) is tilted, whereby its distance to the flat material varies.

2. Method according to claim 1, **characterized in that** a temperature of the flat material (1) is measured in front of the cross-field inductor device (2, 3) and a tilting of the cross-field inductor device (2, 3) is carried out as a function thereof.

3. Method according to claim 2, **characterized in that** a temperature profile is measured over the width of the flat material (1).

4. Method according to claim 2 or 3, **characterized in that** the energy intake of the cross-field inductor device (2, 3) is determined as a function of the measured temperature or the measured temperature profile.

5. Method according to one of the preceding claims, **characterized in that** the tilted position of the cross-field inductor device (2, 3) is effected in a hydraulic, pneumatic or electromechanical manner.

6. Method according to one of the preceding claims, **characterized in that** the cross-field inductor device (2, 3) is displaced transversely to the flat material longitudinal axis.

7. Method according to claim 6, **characterized in that** the cross-field inductor device (2, 3) is displaced transversely to the flat material longitudinal axis as a function of the temperature measurement of the flat material (1) in front of the cross-field inductor device (2, 3).

8. Method according to claims 2, 4 and 7, **characterized in that**, a tilting and a transverse positioning of the cross-field inductor device (2, 3) are carried out as a function of the temperature measurement of the flat material (1) in front of the cross-field inductor device (2, 3).

9. Method according to one of the preceding claims, **characterized in that** a multitude of temperature measurements, in particular in intermediate positions, is carried out on the flat material (1).

10. Installation for inductive heating of flat material (1), which can be transported in a feed direction, having at least one cross-field inductor device (2, 3) which extends transversely to the feed direction over the width of the flat material (1) and has an axis running parallel to the flat material transverse axis, **characterized in that** the installation has a positioning device for the cross-field inductor device (2, 3) with which an upper and/or a lower cross-field inductor device (2, 3) is tilted, whereby its distance to the flat material varies.

11. Installation according to claim 10, **characterized in that** the positioning device comprises a positioning apparatus (4) in each transverse end area of the cross-field inductor device (2, 3) for lifting or lowering the respective cross end of the cross-field inductor device (2, 3).

12. Installation according to claim 10 or 11, **characterized in that** it comprises a temperature measuring device for the flat material (1) in front of the cross-field inductor device (2, 3).

13. Installation according to claim 12, **characterized in that** it comprises a control device which is designed to control the positioning device for lifting or lowering the inductor device (2, 3) depending on the temperature measuring device.

14. Installation according to claim 12 or 13, **characterized in that** the temperature measuring device measures a temperature profile in the transverse direction of the flat material (1).

15. Installation according to one of claims 13 or 14, **characterized in that** the control device determines the energy intake of the cross-field inductor device (2, 3) as a function of the measured temperature and accordingly controls an alternating current source for energy supply.

16. Installation according to one of claims 10 to 15, **characterized in that** it has an upper and a lower cross-field inductor device (2, 3).

17. Installation according to one of claims 10 to 16, **characterized in that** the positioning device (4) is designed as a hydraulic, pneumatic and/or electromechanical actuator.

18. Installation according to one of claims 10 to 17, **characterized in that** it has a device for transverse displacement of the inductor device (2, 3).

19. Installation according to claims 13 and 18, **characterized in that** the control device controls both the positioning device for tilting and the device for transverse displacement.

20. Installation according to any one of claims 12 to 19, **characterized in that** the temperature measuring device has a multitude of sensors.

**Revendications**

1. Procédé de chauffage inductif de matières plates (1) aptes à être transportées dans une direction d'avance avec au moins un dispositif d'inductance à champ transversal (2, 3) s'étendant sur la largeur des matières plates (1) transversalement à la direction d'avance, avec un axe évoluant parallèlement à l'axe des matières plates, **caractérisé en ce qu'**un dispositif d'inductance à champ transversal (2, 3) supérieur et/ou inférieur est incliné, dans lequel son écart par rapport aux matières plates varie.

2. Procédé selon la revendication 1, **caractérisé en ce qu'**une température des matières plates (1) est mesurée en amont du dispositif d'inductance à champ transversal (2, 3) et une inclinaison du dispositif d'inductance à champ transversal (2, 3) est réalisée en fonction de celle-ci.

3. Procédé selon la revendication 2, **caractérisé en ce qu'**un profil de température est mesuré sur la largeur des matières plates (1).

4. Procédé selon la revendication 2 ou 3, **caractérisé en ce que** l'alimentation en énergie du dispositif d'inductance à champ transversal (2, 3) est déterminée en fonction de la température mesurée ou du profil de température mesuré.

5. Procédé selon l'une des revendications précédentes, **caractérisé en ce que** l'inclinaison du dispositif d'inductance à champ transversal (2, 3) est réalisée de façon hydraulique, pneumatique ou électromécanique.

6. Procédé selon l'une des revendications précédentes, **caractérisé en ce que** le dispositif d'inductance à champ transversal (2, 3) est décalé transversalement à l'axe longitudinal des matières plates.

7. Procédé selon la revendication 6, **caractérisé en ce que** le dispositif d'inductance à champ transversal (2, 3) est décalé transversalement à l'axe longitudinal des matières plates en fonction de la mesure de température des matières plates (1) en amont du dispositif d'inductance à champ transversal (2, 3).

8. Procédé selon les revendications 2, 4 et 7, **caractérisé en ce qu'**une inclinaison et un positionnement transversal du dispositif d'inductance à champ transversal (2, 3) sont réalisés en fonction de la mesure de température des matières plates (1) en amont du dispositif d'inductance à champ transversal (2, 3).

9. Procédé selon l'une des revendications précédentes, **caractérisé en ce qu'**une pluralité de mesures de température sont réalisées sur les matières plates (1), en particulier à des positions intermédiaires.

10. Installation de chauffage inductif de matières plates (1) aptes à être transportées dans une direction d'avance avec au moins un dispositif d'inductance à champ transversal (2, 3) s'étendant sur la largeur des matières plates (1) transversalement à la direction d'avance, avec un axe évoluant parallèlement à l'axe des matières plates, **caractérisée en ce que** l'installation présente un dispositif de positionnement pour le dispositif d'inductance à champ transversal (2, 3), lequel permet d'incliner un dispositif d'inductance à champ transversal (2, 3) supérieur et/ou inférieur, dans laquelle son écart par rapport aux matières plates varie.

11. Installation selon la revendication 10, **caractérisée en ce que** le dispositif de positionnement comporte un moyen de positionnement (4) dans chaque région d'extrémité transversale du dispositif d'inductance à champ transversal (2, 3) pour relever ou abaisser l'extrémité transversale respective du dispositif d'inductance à champ transversal (2, 3).

12. Installation selon la revendication 10 ou 11, **caractérisée en ce qu'**elle comporte un dispositif de mesure de température pour les matières plates (1) en amont du dispositif d'inductance à champ transversal (2, 3).

13. Installation selon la revendication 12, **caractérisée en ce qu'**elle comporte un dispositif de commande conçu pour actionner le dispositif de positionnement pour relever ou abaisser le dispositif d'inductance à champ transversal (2, 3) en fonction du dispositif de mesure de température.

14. Installation selon la revendication 12 ou 13, **caractérisée en ce que** le dispositif de mesure de température mesure un profil de température dans la direction transversale des matières plates (1).

15. Installation selon l'une des revendications 13 ou 14, **caractérisée en ce que** le dispositif de commande détermine l'alimentation en énergie du dispositif d'inductance à champ transversal (2, 3) en fonction de la température mesurée et actionne en conséquence une source de courant alternatif pour l'apport d'énergie.

16. Installation selon l'une des revendications 10 à 15, **caractérisée en ce qu'**elle présente un dispositif d'inductance à champ transversal (2, 3) supérieur et inférieur.

17. Installation selon l'une des revendications 10 à 16, **caractérisée en ce que** le moyen de positionnement (4) est conçu comme un organe de réglage hydraulique, pneumatique et/ou électromécanique.

18. Installation selon l'une des revendications 10 à 17, **caractérisée en ce qu'**elle présente un dispositif pour le déplacement transversal du dispositif d'inductance à champ transversal (2, 3).

19. Installation selon les revendications 13 et 18, **caractérisée en ce que** le dispositif de commande actionne aussi bien le dispositif de positionnement pour l'inclinaison que le dispositif pour le déplacement transversal.

20. Installation selon l'une des revendications 12 à 19, **caractérisée en ce que** le dispositif de mesure de température possède une pluralité de capteurs.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 63195397 B
- DE 3928629 A1
- EP 0667731 B1
- DE 4234406 A1
- DE 10013061 A1
- US 20180092163 A1
- DE 10312623 A1
- EP 0274673 A
- EP 1648628 A1
- EP 1148762 B1